(19)

**Europäisches Patentamt**

**European Patent Office**

**Office européen des brevets**

(11) Veröffentlichungsnummer: **0 140 992**
**B1**

(12) **EUROPÄISCHE PATENTSCHRIFT**

(45) Veröffentlichungstag der Patentschrift: **25.05.88**

(21) Anmeldenummer: **83111227.1**

(22) Anmeldetag: **10.11.83**

(51) Int. Cl.⁴: **G 01 L 9/00,** G 01 L 9/06

(54) Wandlerelement, Verfahren zu seiner Herstellung sowie Verwendung für einen Druckaufnehmer.

(43) Veröffentlichungstag der Anmeldung:
**15.05.85 Patentblatt 85/20**

(45) Bekanntmachung des Hinweises auf die
Patenterteilung:
**25.05.88 Patentblatt 88/21**

(84) Benannte Vertragsstaaten:
**AT CH DE FR GB LI**

(56) Entgegenhaltungen:
**EP-A-0 033 749**
**DE-A-2 552 393**
**DE-A-2 938 240**
**DE-A-3 009 163**
**GB-A-2 080 541**
**US-A-3 764 950**

(73) Patentinhaber: **Kristal Instrumente AG**
**Eulachstrasse 22**
**CH-8408 Winterthur (CH)**

(72) Erfinder: **Tanner, René**
**Forrenbergstrasse 8**
**CH-8472 Seuzach (CH)**
Erfinder: **Calderara, Reto**
**Schaffhauserstrasse 51**
**CH-8400 Winterthur (CH)**
Erfinder: **Wenger, Alfred, Dr.**
**Wieshofstrasse 58**
**CH-8408 Winterthur (CH)**
Erfinder: **Sonderegger, Hans-Conrad**
**Sonnhaldenstrasse 7**
**CH-8413 Neftenbach (CH)**

(74) Vertreter: **Schmidt, Horst, Dr.**
**Siegfriedstrasse 8**
**D-8000 München 40 (DE)**

Courier Press, Leamington Spa, England.

**Beschreibung**

Die Erfindung betrifft ein Wandlerelement mit einer wenigstens einen Membranbereich aufweisenden Membranplatte aus Halbleitermaterial mit wenigstens einem Piezowiderstand und einer isolierenden Platte, auf der die Membranplatte befestigt ist. Die Erfindung betrifft ferner Verfahren zur Herstellung des Wandlerelementes sowie einen Druckaufnehmer unter Verwendung des Wandlerelementes.

Die Entwicklung und Anwendung von piezoresistiven Druckaufnehmern auf Basis eines Halbleitermaterials mit z.B. eindiffundierten Widerständen haben in den letzten Jahren umfassende Bedeutung insbesondere bei der Automation erlangt. Das Messelement solcher Druckaufnehmer ist eine auf einem isolierenden Substrat, wie Glas, angeordnete Platte aus vorzugsweise Silizium (Si)-Einkristall, an der ein elastischer Membranbereich ausgebildet ist, der unter dem einwirkenden Messdruck eine Durchbiegung erfährt. An den Stellen mit den höchsten Radial- und Tangentialspannungen sind an dem Membranbereich die Widerstände befestigt bzw. eindiffundiert, die in bekannter Weise zu vollen oder halben Messbrücken geschaltet sind.

Silizium als Einkristallmaterial hat hervorragende mechanische Eigenschaften, indem es praktisch keine Kreich- und Alterungserscheinungen zeigt. Silizium ist daher ein ideales Halbleitermaterial für die Ausbildung der Membranplatten, zumal es hochpräzise mechanisch oder chemisch bearbeitet werden kann und besonders gute elektrische Eigenschaften besitzt. Der wesentliche Nachteil von Silizium ist der um den Faktor 4 bis 6 niedrigere Temperaturausdehnungskoeffizient gegenüber den für die Druckaufnehmergehäuse üblicherweise verwendeten Stählen, insbesondere den austenitischen korrosionsfesten Stählen. Daher können Temperaturänderungen leicht zu Verspannungen und Verwerfungen der an solchen Stählen befestigten Si-Membranplatten führen, was wiederum z.B. Nullpunktsabweichungen zur Folge haben kann.

Die Entwicklungsarbeiten der letzten Jahre haben sich daher mit diesen höchst unerwünschten Verspannungsschwierigkeiten befasst, und es sind verschiedene Massnahmen vorgeschlagen worden, um diesen Nachteil von piezoresistiven Druckaufnehmern auf Basis von Si-Membranplatten wenigstens teilweise zu beseitigen. So wird in der EP—Al—0033749 vorgeschlagen, die Si-Membranplatte durch einen Kunststoff bzw. Silikonkautschuk dehn- und scherelastisch mit der metallischen Montageplatte des Aufnehmergehäuses zu befestigen, so dass die Dehnungsunterschiede zwischen Silizium und Metall elastisch abgefangen werden. Diese Massnahme hat jedoch immer noch Reaktionskräfte auf die Si-Membranplatte zur Folge, so dass sie nur für Druckaufnehmer geeignet ist, an die bezüglich Stabilität und Nullpunktkonstanz geringe Anforderung gestellt werden. Ausserdem zeichnet sich Kunststoff und insbesondere Silikonkautschuk durch einen sehr hohen thermischen Ausdehnungskoeffizienten und eine ausgeprägte Hysterese in Bezug auf das Spannungs/Dehnungsverhalten aus. Beide Eigenschaften können zusätzliche Fehler bei der Druckmessung bewirken.

Aus der DE—Al—29 38 240 ist ein piezoresistiver Druckaufnehmer auf Bais eines Wandlerelementes bekannt, bei dem die Si-Membranplatte durch eine anodische Verbindung, wozu eine Erwärmung im Temperaturbereich von 360°C—500°C notwendig ist, auf einer isolierenden Glasplatte befestigt ist. Da Glas einen höheren Ausdehnungskoeffizienten als Silizium hat, neigt das Laminat aus den beiden Platten dazu, sich bei der Abkühlung zu verspannen, indem die Si-Membranplatte seitlich unter Druckspannung versetzt wird. Dies kann im Extremfall dazu führen, dass die Membran von einer stabilen Lage in eine andere "umklappt" (Büchsendeckeleffekt). Eine solche Instabilität, auch wenn der Extremfall nicht erreicht wird, verändert in höchst unerwünschter Weise die Steilheit oder Kalibrierkurve und ist Ursache für verschiedene Abweichungen von der Linierität. Zudem wird der Nullpunkt von der Temperatur stark anhängig.

Aus der DE—Al—30 09 163 ist weiter ein piezoresistiver Druckaufnehmer auf Basis einer Si-Membranplatte bekannt, die über eine dicke Weichlotschicht auf einer Montageplatte aus einer Fe-Ni-Legierung befestigt ist. Weichlote haben erheblich höhere Ausdehnungskoeffizienten als Silizium und bewirken daher bei Temperaturänderung ebenfalls Verspannung der Membranplatte. Solche Druckaufnehmer eignen sich daher nicht für Präzisionsmessungen.

In der GB—A—20 80 541 wird ein Aufnehmer mit einer auf einer Seite einer Gasplatte befestigten Si-Membranplatte beschrieben. An der gegenüberliegenden Seite der Glasplatte ist ein rohrförmiger Halter aus einer Fe-Ni-Legierung befestigt. Um innere Spannungen bei der anodischen Verbindung der Teile zu minimieren, sind die Wäremeausdehnungskoeffizienten angrenzender Bauteile aufeinander abgestimmt. Zwar kann bei einer bestimmten Zusammensetzung der Fe-Ni-Legierung erreicht werden, dass deren Wärmeausdehnungskoeffizient weitgehend dem von Pyrexglas entspricht, doch ist eine vollkommene Übereinstimmung nicht erzielbar. Dies hat zur Folge, daß zwar Druckaufnehmer hergestellt werden können, bei denen während der anodischen Verbindung keine Rißbildung zu befürchten ist, sofern bestimmte obere Temperaturgrenzwerte nicht überschritten werden, doch haben die verbleibenden Unterschiede in den Wärmeausdehnungskoeffizienten zur Folge, daß hinsichtlich der Nullpunktkonstanz und Messgenauigkeit keine wesentliche Verbesserung gegenüber anderen bekannten Anordnungen erzielt werden.

Der Erfindung liegt demgegenüber die Aufgabe zugrunde, ein Wandlerelement der eingangs erwähnten Art zu schaffen, das preisgünstig und mit hoher Präzision hergestellt werden kann und bei dem Temperaturänderungen in einem weiten Temperaturbereich eine nur geginge oder keine Verspannung der Messmembran zur Folge haben.

Die Lösung dieser Aufgabe zeichnet sich dadurch aus, dass auf der der Membranplatten abgewandten Oberfläche der isolierenden Platte eine Basisplatte begestigt ist, die einen im wesentlichen gleichen Wärmeausdehnungskoeffizient wie die Membranplatte hat und deren Abmessungen auf die Abmessungen der Membranplatte so abgestimmt sind, dass bei Temperaturänderung die von der Membran- und Basisplatte auf die isolierende Platte ausgeübten Verformungskräfte zur Erzielung eines spannungssymmetrischen Zustandes im wesentlichen gleich sind.

Weiterbildungen der Erfindung sind in den Unteransprüchen 2—9 aufgeführt.

Mit den erfindungsgemässen Massnahmen wird erreicht, dass bei Temperaturänderung die von beiden Platten auf die isolierende Platte ausgeübten Verformungskräfte im wesentlichen gleichen Sinne sind wenn beispielsweise der Temperaturausdehnungskoeffizient des Halbleitermaterials kleiner ist als derjenige des Isolationsmaterials, soll der Temperaturausdehnungskoeffizient des Materials der Basisplatte ebenfalls kleiner sein als derjenige des Isolationsmaterials. Die Basisplatte kann ebenfalls anodisch mit dem Isolator gebunden sein oder man verwendet zur Bindung Glasfritten. Beide Verfahren bedingen eine Erwärmung auf 400°C bis 500°C. Bei einer Temperaturänderung sind die Kraftwirkungen beider an den Isolator gebundenen Platten in gleichem Sinne und unterstützen sich gegenseitig. Eine Glasplatte, die auf der einen Seite an eine Silizium Membranplatte und auf der andern Seite an eine Basisplatte ebenfalls aus Silizium gebunden ist, wird bei einer Abkühlung von beiden Seiten an einem thermischen Zusammenziehen gehindert und die Kraftwirkung der Glasplatte auf die Membranplatte ist kleiner, als well keine Basisplatte vorhanden wäre. Die thermisch bedingte Kraftwirkung der Basisplatte auf die Glasplatte bewirkt im Abkühlvorgang in derselben Spannungen, die sich unter Abschwächung durch die Glasplatte hindurch fortsetzen und erhalten bleiben. Durch Wahl einer relativ dicken Basisplatte aus Material mit niedrigem Ausdehnungskoeffizient kann eine Kompensation der Verspannung der Siliziummembran erreicht werden. In der Praxis ist es meistens nicht notwendig, bis zur vollständige Kompensation zu gehen. Es genügt, die Spannungsspitzen abzubauen, damit die Dehnung des Materials im Hook'schen elastischen Bereich bleibt und keine dauernden Deformationen auftreten.

Das Wandlerelement nach der Erfindung zeichnet sich also dadurch aus, dass Temperaturänderungen in einem weiten Temperaturbereich von wenigstens 100°C geringe bis keine Vorspannungsänderung der Membranpartien zur Folge haben. Die mit dem Wandlerelement nach der Erfindung ausgestatteten Druckaufnehmer zeichnen sich daher durch hohe Genauigkeit, Temperaturunabhängigkeit der Empfindlichkeit und Nullpunktstabilität aus.

Die Basisplatte und die Membranplatte können aus gleichen oder verschiedenen Materialien bestehen, sofern deren Temperaturausdehnungskoeffizienten ähnlich demjenigen des Isolators oder der Membranplatten sind. Bevorzugtes Material für die Basis- und Membranplatte ist Silizium, während die isolierende Platte vorzugsweise aus einem geeigneten Glasmaterial besteht. Dies hat u.a. den Vorteil, dass die Platten durch starre anodische Verbindungen aufeinander befestigt werden könne.

Gemäss einer anderen Weiterbildung der Erfindung kann die Basisplatte an einem Zwischenträger aus einem metallischen Material, z.B. einer Eisen-Nickellegierung mit ähnlichem Ausdehnungskoeffizient befestigt sein. Dabei bewirkt die Basisplatte einen Dehnungsausgleich zwischen der isolierenden Platte und dem Zwischenträger, selbst wenn dieser aus einem Material mit höherem Ausdehnungskoeffizienten als das Material der isolierenden Platte bestehen sollte. Die Verbindung der Basisplatte mit dem pilzförmigen Zwischenträger kann eine Klebung, eine Glasfritte oder eine Lötung sein. An dem Zwischenträger kann eine lötfähige Oberflächenbeschichtung vorgesehen sein. Wandlerelemente mit solchen Zwischenträgern können daher im sog. Batchverfahren besonders wirtschaftlich an den Montageplatten bzw. Halterungen der Druckaufnehmer weich gelötet werden.

Das Verfahren zum Herstellen eines Wandlerelementes der eingangs erwähnten Art zeichnet sich dadurch aus, dass man einen eine Vielzahl von Membranbereichen aufweisenden Water aus dem Halbleitermaterial und ein Plattensubstrat aus dem isolierenden Material anodisch miteinander verbindet, das gebildete Laminat zu Einheiten mit jeweils wenigstens einem Membranbereich schneidet, Basisplatten aus einem Material mit im wesentlichen dem gleichen Wärmeausdehnungskoeffizient wie die Membranplatte und einer auf die Membranplatte jeder Einheit abgestimmten Abmessung vorfertigt, und auf der isolierenden Platte jeder Einheit eine vorgefertigte Basisplatte befestigt, wonach bei Temperaturänderung die von der Basisplatte und Membranplatte auf die isolierende Platte ausgeübten Verformungskräfte zur Erzielung eines spannung ymmetrischen Zustandes im wesentlichen gleich sind.

Diese Vorgehensweise hat den Vorteil, dass sich die Ausbildung der anodischen Verbindung zwischen dem Membranwafer und dem isolierenden in der Regel durchsichtigen Substrat leicht visuell überwachen lässt. Die Befestigung der Basisplatte an der isolierenden Platte erfolgt vorzugsweise gleichzeitig in ein und demselben Wärmebehandlungsprozess zusammen mit der Befestigung der Basisplatte an der Halterung des Aufnehmers oder an einem pilzförmigen Zwischenträger. Vorzugsweise wird die Basisplatte mit der isolierenden Platte bzw. der Halterung durch Glasfritten verbunden, es wäre aber auch eine Klebeverbindung möglich.

Eine Alternative zu dem vorgenannten Verfahren zeichnet sich dadurch aus, dass man ein Plattensubstrat aus dem isolierenden Material zwischen einem eine Vielzahl von Membranbereichen aufweisenden Wafer aus dem Halbleitermaterial und einem Basiswafer anordnet und anodisch mit dem Wafern verbindet, wobei der Basiswafer aus einem Material mit im wesentlichen gleichem Wärmeausdehnungskoeffizient wie der Membranwafer besteht und eine auf dem Membranwafer abgestimmte Abmessung hat, und das so gebildete Laminat zu Einheiten mit wenigstens einem Membranbereich schneidet, wonach bei Temperaturänderung die von der Membran- und Basisplatte jeder Einheit auf die isolierende Platte ausgeübten Verformungskräfte zur Erzielung eine spannungssymmetrischen Zustandes im wesentlichen gleich sind.

Auf diese Weise kann gleichzeitig eine Vielzahl von Wandlerelementen mit den hochentwickelten dem Fachmann grundsätzlich bekannten Methoden der Halbleitertechnologie in wirtschaftlicher Weise hergestellt werden. Das erhaltene Wandlerelement kann dann in einem weiteren Schritt, z.B. durch Aufkleben oder durch Glasfritten, an einer Montageplatte bzw. Halterung des Druckaufnehmers befestigt werden. Unter Glasfritten versteht man das Aufgeben eines Glaspulvers auf die zu verbindenden Oberflächen und das anschliessende Aufschmelzen des Glases.

Ein Druckaufnehmer unter Verwendung eines Wandlerelementes der vorerwähnten Art zeichnet sich dadurch aus, dass das Wandlerelement direct oder über einen an der Basisplatte befestigten Zwischenträger an einer im Aufnehmergehäuse angeordneten Halterung befestigt ist. Die Befestigung kann durch Kleben, Löten oder Glasfritten erfolgen. Bezüglich anderer Weiterbildungen wird auf die abhängigen Ansprüche 14—18 verwiesen.

Um die Auswirkungen von Wärmeverspannungen zwischen der Halterung des Wandlerelementes und dem Aufnehmergehäuse möglichst gering zu halten, sollte die Halterung vorzugsweise dehnungselastisch mit dem Aufnehmergehäuse verbunden sein. Eine besonders vorteilhafte Weiterbildung der Erfindung zeichnet sich deshalb dadurch aus, dass die Halterung über ein dehnungselastisches rohrförmiges Teil mit dem Aufnehmergehäuse verbunden ist. Die Halterung erhält dadurch einen im wesentlichen U-förmigen Querschnitt. Dadurch werden nicht nur die Wärmeausdehnungen des Aufnehmergehäuses elastisch abgefangen, sondern wird auch der weitere Vorteil erzielt, dass die empfindlichen Einglasungen, mit denen die elektrischen Leiter, die die Messignale nach aussen abführen, in der Halterung befestigt sind, genügend weit von der Stelle entfernt angeordnet werden könne, an der das rohrförmige Teil mit dem Aufnehmergehäuse verschweisst wird. Dies vermeidet schädliche lokale Ueberhitzungen der Einglasungen.

Das rohrförmige elastische Teil kann auf der gleichen Seite der Halterung wie das Wandlerelement angeordnet sein. In diesem Fall erfolgt der Einbau der Haltung mit dem darauf befindlichen Wandlerelement von unten in das Aufnehmergehäuse. Daher kann vor Einbau der Halterung eine am Gehäuse vorzusehende Abdichtungsmembran für ein Druckübertragungsmedium angebracht und auf ordnungsgemässe Funktion überprüft werden.

Das elastische rohrförmige Teil kann auch auf der dem Wandlerelement abgewandten Seite der Haltung angeordnet sein. Dies eröffnet die Möglichkeit, das Druckübertragungsmedium auch seitlich auf die Halterung bzw. das rohrförmige Teil einwirken zu lassen, so dass die elektrischen, in der Halterung eingeglasten Leiter einem seitlichen Druck ausgesetzt werden. Hierdurch wird vermieden, dass insbesondere bei hohen Messdrücken die elektrischen Leiter aus den Einglasungen herausgepresst werden.

Die Erfindung wird nachfolgend anhand von Ausführungsformen unterBezugnahme auf die Zeichnung näher erläutert. Es zeigen:

Fig. 1 in geschnittener Ansicht ein erfindungsgemäss aufgebautes Wandlerelement mit Darstellung der vom Messdruck ausgeübten Kräfte.

Fig. 2 fragmentarische Teilansichten von Wandlerelementen ählich Fig. 1 für Absolutdruckmessungen (linke Zeichnungshälfte) bzw. Relativdruckmessungen (rechte Zeichnungshälfte) und deren Befestigung auf entsprechend ausgebildeten Montageplatten bzw. Halterungen und mit eingezeichneten Verformungskräften.

Fig. 3 fragmentarische Teilansichten von Wandlerelementen ähnliche Fig. 2 für Absolut- bzw. Relativdruckmessungen in Verbindung mit entspechend ausgebildeten Zwischenträgern, wobei die Basisplatte wesentlich stärker als die Membranplatte ausgebildet ist,

Fig. 4 eine perspektivische geschnittene Teilsicht eines Laminates aus einem Membranwafer und einem isolierenden Substrat,

Fig. 5 eine perspektivische geschnittene Ansicht eines aus dem Laminat nach Fig. 4 geschnittenen Wandlerelementes mit nachträglich befestigter Basisplatte,

Fig. 6 eine perspektivische geschnittene Teilsicht eines Laminates, bestehend aus einem Membranwafer, einem Basiswafer und einem dazwischen angeordneten Substrat,

Fig. 7 eine perspektivische geschnittene Ansicht eines aus dem Laminat nach Fig. 6 geschnittenen Wandlerelementes für Relativdruckmessungen,

Fig. 8 eine geschnittene Ansicht von einem erfindungsgemässen Druckaufnehmer gemäss einer ersten Ausführungsform mit einer Wandlerelement nach der Erfindung, und

Fig. 9 bis 11 geschnittene Ansichten von bevorzugten Ausführungsformen von erfindungsgemässen Druckaufnehmern mit Wandlerelementen nach der Erfindung.

In der Zeichnung tragen gleiche oder ähnliche Teile die gleichen Bezugszeichen. Die verwendeten Begriffe "oben" und "unten" beziehen sich auf die in der Zeichnung wiedergegebene Lage der Teile.

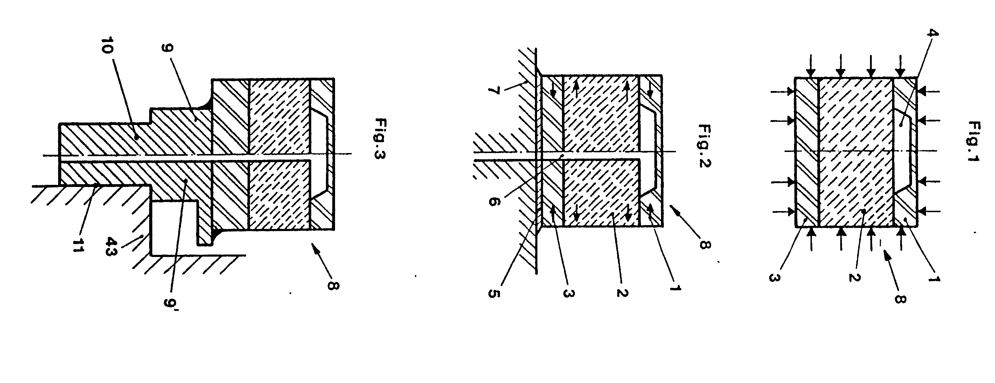

In Fig. 1 ist mit dem allgemeinen Bezugszeichen 8 ein kräftesymmetrisches bzw. dehungskompensiertes Wandlerelement nach der Erfindung gezeigt, das eine obere Membranplatte 1, eine zwischenliegende isolierende Platte 2 und eine untere Basisplatte 3 umfasst. Die Membranplatte 1 besteht aus einem Halbleitermaterial, vorzugsweise Silizium, in dessen mittleren Bereich von unten eine Aussparung 4 eingebracht ist, die die Wandstärke der Platte 1 membranartig verdünnt. Die Membranplatte 1 weist Piezowiderstände auf, die nach bekannten Methoden der Halbleitertechnik in die Platte eindiffundiert oder auf ihr befestigt sein können.

Mit ihrem dickwandigen Randbereich ist die Membranplatte 1 auf der isolierenden Platte 2 befestigt. Die isolierende Platte 2 sollte aus einem Material mit geeignetem Temperaturausdehnungskoeffizienten in Bezug auf die Membranplatte 1 bestehen, das sich zudem gut mit der Membranplatte 1 verbinden lässt. Geeignet für die isolierende Platte 2 sind insbesondere Glasmaterialien, vorzugsweise Borsilikat-Gläser, deren thermischer Ausdehnungskoeffizient zwar niedriger ist als derjenige anderer Gläser, aber immer noch höher als derjenige von Silizium ist.

Die Basisplatte 3 kann grundsätzlich aus irgendeinem geeigneten Material bestehen, das einen ebenso niedrigen oder niedrigeren Temperaturausdehnungskoeffizienten wie das Material der Membranplatte 1 hat. Silizium hat sich als geeignet für die Basisplatte 3 erwiesen.

Die Verbindung der Platten 1, 2 und 3 kann nach bekannten Methoden der Halbleitertechnik erfolgen, wobei insbesondere die anodische-Verbindung wegen ihrer hohen Festigkeit und Steifigkeit bevorzugt wird. Die anodische Verbindungstechnik ist dem Fachmann bekannt und braucht deshalb nicht näher erläutert zu werden.

In einer bevorzugten Ausführung der Erfindung ist die Basisplatte 3 so auf die Membranplatte 1 abgestimmt, dass bei Temperaturänderungen die im Wandlerelement auftretenden Kräfte ungefähr symmetrisch wirken, wie etwa in Fig. 2 angedeutet. Dies bedeutet, dass insbesondere die Flächenausdehnungskräfte, die zwischen der Membranplatte 1 und der isolierenden Platte 2 einerseits bzw. zwischen der Basisplatte 3 und der isolierenden Platte 2 andererseits wirken, im wesentlichen gleich sind und wegen der gleichmässigen Schubspannungsverteilung auf beiden Seiten der Glasplatte die niedrigsten Spannungsspitzen auftreten. Ausserdem treten keine Verwerfungen des Wandlerelementes, insbesondere von dessen Membranplatte, auf. Dies wird durch die erwähnte Wahl der für die Membranplatte 1 und die Basisplatte 3 verwendeten Materialien mit im wesentlichen gleichen Temperaturausdehnungskoeffizienten erreicht und ferner dadurch, dass die Konfiguration bzw. Abmessung, d.h. insbesondere die Dicke, der Basisplatte 3 auf die Membranplatte 1 abgestimmt ist, so dass die in den beiden Platten 1 und 3 auftretenden Flächenausdehnungskräfte einander im wesentlichen kompensieren. Im Ergebnis wird ein Wandlerelement erhalten, das sich bei Temperaturänderung nicht oder nur unwesentlich verformt, d.h. seine ursprüngliche Gestalt beibehält.

Fig. 2 zeigt auf der linken Zeichnungshälfte ein Wandlerelement 8 gemäss Fig. 1 für Absolutdruckmessungen, während das auf der rechten Zeichnungshälfte von Fig. 2 dargestellte Wandlerelement für Relativdruckmessungen ausgebildet ist. Zu diesem Zweck sind die Basisplatte 3 und die isolierende Platte 2 von einer Durchgangsbohrung 6 durchsetzt, die in der Aussparung 4 der Membranplatte 1 ausmündet. Die Aussparung 4 und damit die Unterseite des Membranbereiches der Membranplatte 1 können daher unter Druck gesetzt werden. Die Bohrung kann in irgendeiner geeigneten Weise, z.B. durch Ultraschall, in das Wandlerelement eingebracht werden.

Fig. 2 zeigt weiter, wie das Wandlerelement 8 an einer Unterlage bzw. Halterung 7 durch eine Zwischenschicht 5 befestigt ist. Ein bevorzugtes Verfahren zum Befestigen des Wandlerelementes 8 auf der Haltung 7 ist das sog. Glasfritten, bei dem auf die zu verbindenen Oberflächen Glaspulver aufgestreut und aufgeschmolzen wird. Diese Technik ist dem Fachmann bekannt und braucht nicht näher erläutert zu werden. Eine einfachere Methode ist das Aufkleben.

Fig. 3 zeigt ein Wandlerelement für Absolutdruckmessungen bzw. Relativdruckmessungen (linke bzw. rechte Zeichnungshälfte), bei dem die Basisplatte 3 verdickt und auf einem im Querschnitt T-förmigen oder pilzförmigen metallischen Zwischenträger 9, 9' in geeigneter Weise z.B. mittels eines Epoxyklebers, durch Glasfritten oder Löten befestigt ist. Der Zwischenträger 9, 9' besteht vorzugsweise aus einem Material, das sich unter Temperaturänderung ähnlich wie das material der isolierenden Platte 2 verhält. Aber selbst bei deutlich unterschiedlichen Temperaturausdehnungskoeffizienten der Materialien für den Zwischenträger 9 und die isolierende Platte 2 wirkt die Basisplatte 3 des Wandlerelementes ausgleichend dergestalt, dass eine Rissbildung der isolierenden Platte 2 vermieden wird. Diese Gefahr besteht, wenn die isolierende Platte 2 direkt·auf dem metallischen Zwischenträger 9, 9' befestigt werden würde, da alle Glassorten nur sehr geringe Zugspannungen zulassen.

Wie gezeigt kann er von Vorteil sein, die Basisplatte 3 dicker als die Membranplatte 1 auszuführen. Für gewisse Temperaturbereiche lassen sich durch unsymmetrische Kräfteverteilung geringere Spannungsspitzen in der Membranplatte 1 erreichen.

Der Zwischenträger 9, 9', der in Verbindung mit einem Wandlerelement für Relativdruckmessungen ebenfalls von einer zu der Bohrung 6 ausgerichteten Durchgangsbohrung durchsetzt ist, kann an seinem Schaftbereich 10 eine lötfähige Oberflächenschicht 11 aufweisen. Dies eröffnet z.B. die Möglichkeit, im sog. Batchverfahren gleichzeitig eine Vielzahl von Zwischenträgern 9, 9' mit daran befestigten Wandlerelementen 8 an einer entsprechenden Vielzahl von Halterungen 7 anzulöten.

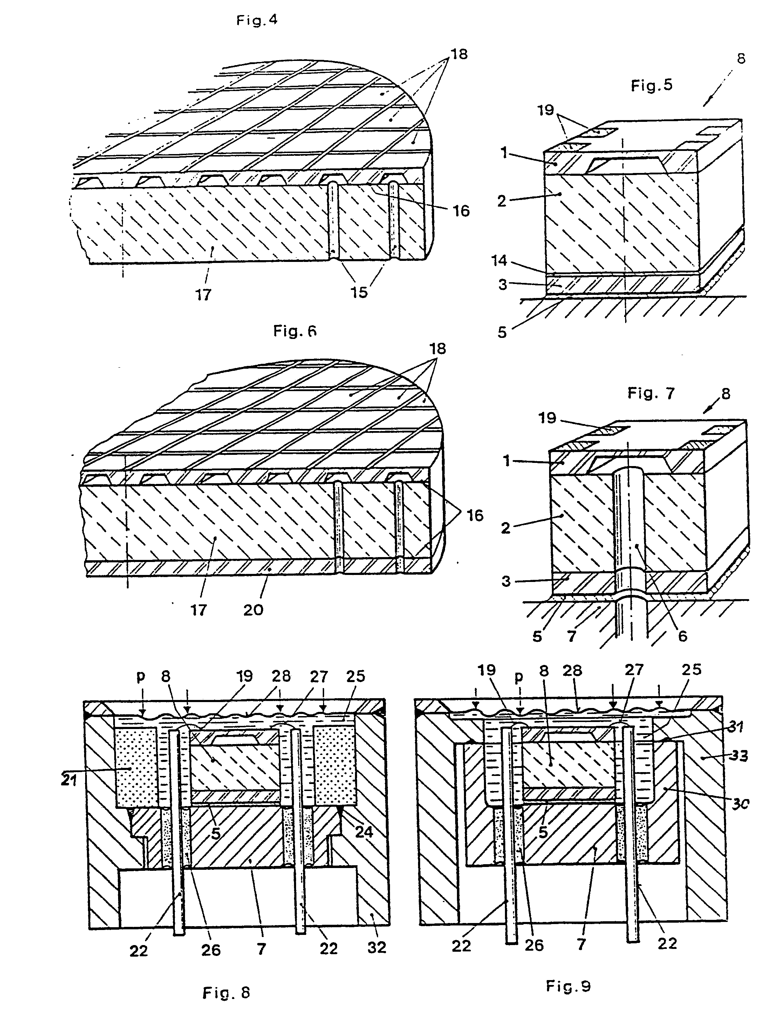

Anhand von Fig. 4, 5, 6 und 7 werden nachfolgend bevorzugte Verfahren zum Herstellen der Wandlerelemente nach der Erfindung beschrieben. Dabei wird grundsätzlich von Methoden der Halbleitertechnik Gebrauch gemacht, wie sie z.B. in der US—PS—37 64 950 beschrieben sind.

Nach Fig. 4 wird auf einem isolierenden plattenförmigen Substrat 17, aus z.B. einem geeigneten Glasmaterial, ein sog. Wafer 18 aus einem für die Bildung der Membranplatten 1 geeigneten Halbleitermaterial, wie Silizium, mittels einer anodischen Verbindung 16 aufgebracht. Der Wafer ist, wie dargestellt, in eine Vielzahl von Einheiten unterteilt, die eine Abmessung und Konfiguration entsprechend der Membranplatte 1 eines herzustellenden Wandlerelementes haben.

Für die Schaffung von Wandlerelementen für Relativdruckmessungen kann das plattenförmige Substrat 17, wie bei 15 angedeutet, durchbohrt sein.

Das Zweischichtenlaminat nach Fig. 4 hat den Vorteil, dass die Verbundungszone 16 zwischen dem Wafer 18 und dem isolierenden Substrat 17, das vorzugsweise eine Glasplatte ist, leicht optisch überwacht werden kann. Man erkennt dabei sofort die Zonen, die eine perfekte Verbindung der beiden Platten eingegangen sind. Aus dem Zweischichtenlaminat gemäss Fig. 4 werden Einheiten entsprechend jeweils einem Wandlerelement mit einer Membranplatte 1 und einer isolierenden Platte 2 gemäss Fig. 5 z.B. mittels einer Diamantsäge geschnitten. Auf jede so gebildete Einheit wird anschliessend eine vorgefertigte Basisplatte 3, wie sie in Verbindung mit Fig. 1 beschrieben wurde, z.B. durch eine Glasfrittenverbindung 14, befestigt.

Es besteht auch die Möglichkeit, die Basisplatte 3 in ein und demselben Wärmebehandlungsvorgang gleichzeitig an der isolierenden Platte 2 und an der Halterung 7 des Aufnehmers zu befestigen, wie dies in Fig. 5 durch die Zwischenschicht 5 angedeutet ist, bei der es sich ebenfalls um eine Glasfrittenverbindung handeln kann. Mit dem Bezugszeichen 19 sind Anschlussstellen an der Membranplatte 1 angedeutet, über die das elektrische Signal der Widerstände abgenommen werden kann.

Das in Fig. 6 gezeigte Verfahren unterscheidet sich von dem Verfahren nach Fig. 5 darin, dass auf der dem Wafer 18 gegenüberliegenden Seite des isolierenden Substrates 17 ein weiterer Wafer 20 aufgebracht ist, aus dem die Basisplatten 3 gebildet werden. Die Wafer 18 und 20 sind mit dem isolierenden Substrat 17 vorzugsweise durch anodische Verbindungen 16 verbunden. Ein aus dem Dreischichtenlaminat gemäss Fig. 6 herausgeschnittenes Wandlerelement ist in Fig. 7 gezeigt und entspricht dem Element, das in Verbindung mit Fig. 1 und 2 näher erläutert wurde. Das Wandlerelement kann über eine Zwischenschicht 5, z.B. eine Glasfrittenverbindung, auf der Halterung 7 des Aufnehmers befestigt sein, oder es kann auch eine Klebung vorgesehen werden.

Fig. 8 zeigt einen Druckaufnehmer mit einem symmetrischen Wandlerelement 8 gemäss Fig. 1. Das Wandlerelement 8 ist über eine Zwischenschicht 5 direkt auf der plattenförmigen Halterung des Aufnehmers befestigt bzw. aufgeklebt. Die Halterung 7 weist Bohrungen auf, in denen elektrische Leiter 22 in Glasaugen 26 eingegossen sind. Die elektrischen Leiter 22 sind mit den Anschlussstellen 19 der Widerstände an der Membranplatte 1 durch Drähte 27 aus Gold oder Aluminium verbunden.

Die Halterung 7 liegt, wie dargestellt, auf einer ringförmigen Absatzfläche an einer zwischenliegenden Stelle des Aufnehmergehäuses 32 auf und ist durch eine umfängliche Schweissnaht 24 hermetisch mit dem Aufnehmergehäuse verbunden. Die Druckbeaufschlagung des Wandlerelementes 8 erfolgt über ein Druckübertragungsmedium 25, bei dem es sich vorzugsweise um Silikonöl handelt. Das Druckübertragungsmedium füllt im wesentlichen den vom Gehäuse 32 oberhalb der Halterung 7 umschlossenen Raum der, wie dargestellt, oben durch eine am Gehäuse 32 befestigte elastische Metallmembran 28 abgedichtet ist. Um das Volumen des Raumes bzw. die Menge an eingefülltem Druckübertragungsmedium 25 klein zu halten, ist in dem Gehäuse ein Ring 21 aus einem keramischen Material eingesetzt. Die Halterung 7 besteht wegen der besseren Bearbeitungsmöglichkeit und der erforderlichen Durchführungsbohrungen für die Leiter 22 aus einem nicht korrosionsfestem Stahl mit einem Temperaturausdehnungskoeffizienten, der kleiner als der Ausdehnungskoeffizient der für das Gehäuse der Druckaufnehmer vorzugsweise verwendeten austenitischen Stähle ist. Bei Temperaturänderung können daher wegen der unterschiedlichen Ausdehnungskoeffizienten zwischen der Halterung und dem Gehäuse der Druckaufnehmer Verwerfungen auftreten, die sich ebenfalls nachteilig auf die Messgenauigkeit und Reproduzierbarkeit auswirken. Um dies zu verhindern, ist bei den in Fig. 9—11 gezeigten bevorzugten Druckaufnehmern nach der Erfindung die das Wandlerelement tragende Halterung über ein rohrförmiges elastisches Teil 30 mit dem Aufnehmergehäuse 33 verbunden.

Diese dehnungselastische Anbindung bewirkt, dass sich Wärmespannungen wesentlich geringer auf die Zwischenschicht zwischen Halterung und Wandlerelement auswirken, als dies bei der einfachen plattenförmigen Halterung gemäss der Ausführungsform nach Fig. 8 der Fall ist. Die dehnungselastische Anbindung liefert daher einen weiteren wichtigen Beitrag hinsichtlich der Schaffung von piezoresistiven Druckaufnehmern für Präzisionsmessungen, bei denen die Messgenauigkeit durch Temperaturänderungen im wesentlichen nicht beeinträchtigt wird.

Bei dem Druckaufnehmer gemäss Fig. 9 ist das rohrförmige dehnungselastische Teil 30 an der gleichen Seite wie das Wandlerelement 8 an der Halterung 7 angeformt und an seiner freien oberen Stirnseite, wie bei 31 angedeutet, über eine Stumpfverschweissung mit einer horizontalen Absatzfläche am Aufnehmergehäuse 33 verschweisst. Ansonsten entspricht der Aufnehmer nach Fig. 9 dem nach Fig. 8, so dass insofern hierauf Bezug genommen werden kann. Der Aufnehmer nach Fig. 9 hat den Vorteil, dass die Anordnung aus Halterung 7 und Wandlerelement 8 von unten in das Gehäuse 33 eingesetzt werden kann, nachdem die Membran 28 an Gehäuse befestigt worden ist. Die ordnungsgemässe Befestigung und Ausbildung der Membran 28 kann daher überprüft werden, bevor die Halterung 7 mit dem Wandlerelement 8 über das rohrförmige Teil 30 am Gehäuse 33 befestigt wird.

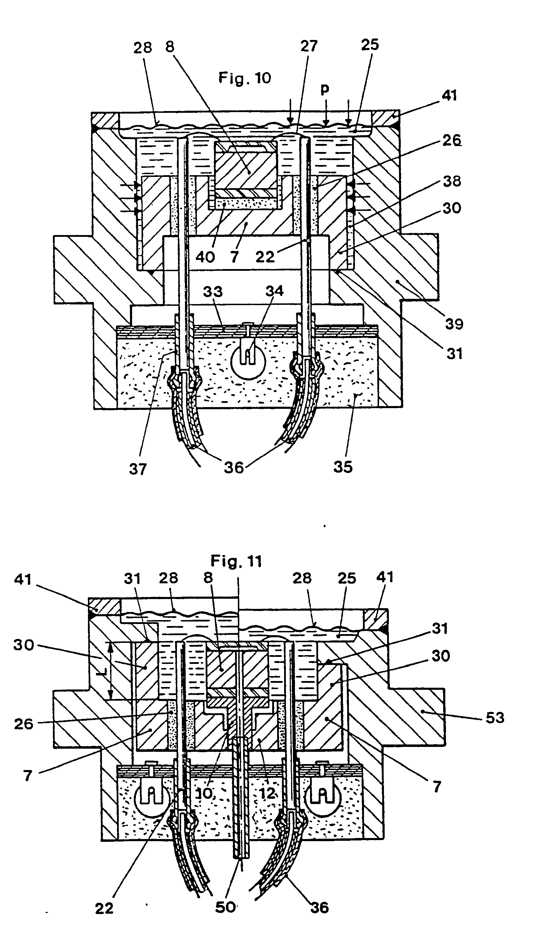

Fig. 10 zeigt einen Druckaufnehmer mit einer Halterung 7, die an ihrer oberen Seite eine Aussparung aufweist, in der das Wandlerelement 8 z.B. durch eine Schicht 40 auf Basis eines Epoxyharzes befestigt ist. Von der dem Wandlerelement 8 abgewandten unteren Seite der Halterung 7 steht das rohrförmige dehnungselastische Teil 30 ab, das an seiner freien Stirnseite mit einer Absatzfläche am Aufnehmergehäuse 39 stumpfverschweisst ist. Da sich das rohrförmige Teil 30 von der Membran 28 wegersteckt, muss die Anordnung aus der Halterung 7 mit dem daran befestigten Wandlerelement 8 zunächst am Gehäuse 39 befestigt werden, bevor die Membran 28 montiert werden kann. Infolge der Montage von der Membranseite her eröffnet sich die Möglichkeit, das Druckübertragungsmedium 25 auch in einem ringförmigen Raum 38 zwischen der Halterung und der inneren Umfangsfläche des Gehäuses 39 und damit radial auf die Halterung 7 wirken zu lassen. Die elektrischen Leiter 22 werden daher auch unter hohen Mediumdrücken nicht undicht oder aus den Glasaugen 26 herausgepresst. Der in Fig. 10 gezeigte Druckaufnehmer eignet sich daher insbesondere für Hochdruckmessungen.

Wie dargestellt, kann weiter eine Platte 33 mit Kompensationswiderständen 34 an einem unteren Bereich des Aufnehmergehäuses 39 befestigt sein. Die elektrischen Leiter 22 sind über Gleitbüchsen 37 durch die Platte 33 geführt.

Litzen 36 der elektrischen Leiter 22 dienen der Signalabführung. Die Platte 33, die Widerstände 34 und die elektrischen Leiter 22 können in einer Kunststoffmasse 35 eingebettet sein, die im unteren Bereich des Gehäuses 39 wie dargestellt, eingeführt ist.

Fig. 11 zeigt einen Druckaufnehmer für Relativdruckmessungen unter Verwendung einer Anordnung aus Wandlerelement und Zwischenträger, wie sie in Fig. 3 auf der rechten Zeichnungshälfte gezeigt ist. Das symmetrische Wandlerelement 8 ist, wie in Verbindung mit Fig. 3 beschrieben, an dem T-förmigen Zwischenträger befestigt, der seinerseits mit seinem Schaftbereich 10 in einem Loch in der Halterung 7 eingelötet ist. Statt der Lötverbindung kann auch eine Kittverbindung vorgesehen werden.

Wie bei der Ausführung nach Fig. 9 wird die Halterung 7 mit dem elastischen rohrförmigen Teil 30 und der angelöteten Anordnung aus Zwischenträger und Wandlerelement von unten in das Aufnehmergehäuse 53 eingesetzt, wonach die freie obere Stirnseite des rohrförmigen Teiles 30 mit einer ringförmigen Absatzfläche am Aufnehmergehäuse 53, wie bei 31 angedeutet, stumpfverschweisst wird. Die für die Relativdruckmessung erforderliche Druckzuführung zu der Unterseite der Membranplatte des Wandlerelementes 8 erfolgt über ein am Schaftbereich 10 des Zwischenträgers befestigtes Rohr 50, das sich nach unten aus dem Aufnehmer herauserstreckt. Die Länge L des rohrförmigen elastischen Teiles 30 kann entsprechend den jeweiligen Verhältnissen gewählt werden, so dass stets gewährleistet ist, dass die die elektrischen Leiter 22 haltenden Glasaugen 26 nicht durch die Schweissung an der Stelle 31 überhitzt werden und gleichzeitig das rohrförmige elastische Teil 30 die gewünschte dehnungsausgleichende Wirkung ausüben kann. Ansonsten entspricht der in Fig. 11 gezeigte Aufnehmer im wesentlichen der Ausführung nach Fig. 9 und in Bezug auf die im unteren Teil des Aufnehmergehäuses vorgesehenen Teile den Teilen 33 bis 37 bei der Ausführungsform nach Fig. 10, so dass hierauf Bezug genommen werden kann.

Gemeinsam ist den in Fig. 9 bis 11 gezeigten Druckaufnehmern, dass sie infolge der Kombination eines symmetrischen und damit verwerfungsfreien Wandlerelementes mit einer verspannungsfreien Verbindung der Halterungen mit den Aufnehmergehäusen über ein rohrförmiges dehnungselastisches Teil eine aussergewöhnliche Stabilität und Nullpunktkonstanz aufweisen und damit Präzisionsdruckaufnehmer darstellen. Diese Druckaufnehmer können dank der hochentwickelten Halbleitertechnik in Verbindung mit den bekannten Batchverfahren dennoch preiswert hergestellt werden.

**Patentansprüche**

1. Wandlerelement mit einer wenigstens einen Membranbereich aufweisenden Membranplatte (1) aus Halbleitermaterial mit wenigstens einem Piezowiderstand und einer isolierenden Platte (2), auf der die Membranplatte (1) befestigt ist, dadurch gekennzeichnet, daß auf der der Membranplatte (1) abgewandten Oberfläche der isolierenden Platte (2) eine Basisplatte (3) befestigt ist, die einen im wesentlichen gleichen Wärmeausdehnungskoeffizient wie die Membranplatte (1) hat und deren Abmessungen auf die Abmessungen der Membranplatte (1) so abgestimmt sind, daß bei Temperaturänderung die von der Membran- und Basisplatte (1, 2) auf die isolierende Platte (2) ausgeübten Verformungskräfte zur Erzielung eines spannungssymmetrischen Zustandes im wesentlichen gleich sind.

2. Wandlerelement nach Anspruch 1, dadurch gekennzeichnet, daß die Basisplatte (3) und die Membranplatte (1) aus gleichen Materialien bestehen.

3. Wandlerelement nach Anspruch 2, dadurch gekennzeichnet, daß die Membranplatte (1) und die Basisplatte (3) aus Siliziummaterial insbesondere Silizium-Einkristall bestehen.

4. Wandlerelement nach Anspruch 1, 2 oder 3, dadurch gekennzeichnet, daß die isolierende Platte aus Glasmaterial besteht.

5. Wandlerelement nach einem der Ansprüche 1 bis 4, gekennzeichnet durch eine anodische Verbindung zwischen der Membranplatte (1) und der isolierenden Platte (2) und einer Glasfrittenverbindung zwischen der isolierenden Platte (2) und der Basisplatte (3).

6. Wandlerelement nach einem der Ansprüche 1 bis 4, gekennzeichnet, durch eine anodische Verbindung zwischen der Membranplatte (1) und der isolierenden Platte (2) sowie gleichzeitig durchgeführten Glasfrittenverbindungen zwischen der isolierenden Platte (2) und der Basisplatte (3) sowie der Basisplatte (3) und einer Unterlage (7, 9).

7. Wandlerelement nach einem der Ansprüche 1 bis 4, gekennzeichnet, durch anodische Verbindungen zwischen der Membranplatte (1), der isolierenden Platte (2) und der Basisplatte (3).

8. Wandlerelement nach einem der vorhergehenden Ansprüche, gekennzeichnet, durch einen an der der isolierenden Platte (2) abgewandten Oberfläche der Basisplatte (3) befestigten Zwischenträger (9) aus einem Material mit im wesentlichen gleichem Wärmeausdehnungskoeffizienten wie die isolierende Platte (2).

9. Wandlerelement nach einem der vorhergehenden Ansprüche, gekennzeichnet durch wenigstens ein die Basisplatte (3) und die isolierende Platte (2) in Ausrichtung zum Membranbereich der Membranplatte (1) durchsetzendes Loch (6).

10. Verfahren zum Herstellen eines Wandlerelementes, bei dem eine wenigstens einen Membranbereich aufweisende Membranplatte (1) aus Halbleitermaterial mit wenigstens einem Piezowiderstand auf einer Platte (2) aus isolierendem Material auf anodischem Wege befestigt ist, dadurch gekennzeichnet, daß man einen eine Vielzahl von Membranbereichen aufweisenden Wafer (18) auf dem Halbleitermaterial und ein Plattensubstrat (17) aus dem isolierenden Material anodisch miteinander verbindet, das gebildete Laminat zu Einheiten mit jeweils wenigstens einem Membranbereich schneidet, Basisplatten (3) aus einem Material mit im wesentlichen dem gleichen Wärmeausdehnungskoeffizient wie die Membranplatte (1) und einer auf die Membranplatte (1) jeder Einheit abgestimmten Abmessung vorfertigt, und auf der isolierenden Platte (2) jeder Einheit eine vorgefertigte Basisplatte befestigt, wonach bei Temperaturänderung die von der Basisplatte (3) und Membranplatte (1) auf die isolierende Platte (2) ausgeübten Verformungskräfte zur Erzielung eines spannungssymmetrischen Zustandes im wesentlichen gleich sind.

11. Verfahren zum Herstellen eines Wandlerelementes, bei dem eine wenigstens einen Membranbereich aufweisende Membranplatte (1) aus Halbleitermaterial mit wenigstens einem Piezowiderstand auf einer Platte (2) aus isolierendem Material auf anodischem Wege befestigt ist, dadurch gekennzeichnet, daß man ein Plattensubstrat (17) aus dem isolierenden Material zwischen einem eine Vielzahl von Membranbereichen aufweisenden Wafer (18) aus dem Halbleitermaterial und einem Basiswafer (20) anordnet und anodisch mit den Wafern verbindet, wobei der Basiswafer (20) aus einem Material mit im wesentlichen gleichem Wärmeausdehnungskoeffizient wie der Membranwafer (18) besteht und eine auf den Membranwafer abgestimmte Abmessung hat, und das so gebildete Laminat zu Einheiten mit wenigstens einem Membranbereich schneidet, wonach bei Temperaturänderung die von der Membran- und Basisplatte (1, 3) jeder Einheit auf die isolierende Platte (2) ausgeübten Verformungskräfte zur Erzielung eines spannungssymmetrischen Zustandes im wesentlichen gleich sind.

12. Verfahren nach Anspruch 10 oder 11, dadurch gekennzeichnet, daß man in Ausrichtung zu dem Membranbereichen des Membranwafers (18) jeweils das isolierende Plattensubstrat (17) und den Basiswafer (20) durchsetzende Löcher (15) einbringt.

13. Druckaufnehmer mit einem Wandlerelement nach einem der Ansprüche 1 bis 9, dadurch gekennzeichnet, daß das Wandlerelement (8) direkt oder über einen an der Basisplatte (3) befestigten Zwischenträger (9) an einer im Aufnehmergehäuse (32, 33, 39, 53) angeordneten Halterung (7) befestigt ist.

14. Druckaufnehmer nach Anspruch 13, dadurch gekennzeichnet, daß die Halterung (7) im wesentlichen plattenförmig ausgebildet und dehnungselastisch mit dem Aufnehmergehäuse (33, 39, 53) verbunden ist.

15. Druckaufnehmer nach Anspruch 12 oder 14, dadurch gekennzeichnet, daß die Halterung (7) über ein rohrförmiges Teil (30) mit dem Aufnehmergehäuse (33, 39, 53) verbunden ist.

16. Druckaufnehmer nach Anspruch 15, dadurch gekennzeichnet, daß sich das rohrförmige Teil (30) von der gleichen Seite der Halterung (7) wie das Wandlerelement (8) erstreckt.

17. Druckaufnehmer nach Anspruch 15, dadurch gekennzeichnet, daß sich das rohrförmige Teil (30) von der dem Wandlerelement (8) abgewandten Seite der Halterung (7) erstreckt.

18. Druckaufnehmer nach einem der Ansprüche 13 bis 17, dadurch gekennzeichnet, daß in an sich bekannter Weise zur Druckbeaufschlagung des Wandlerlementes (8) ein Druckübertragungsmedium (25) im Aufnehmer durch eine Membran (28) hermetisch abgedichtet ist.

**Revendications**

1. Elément transducteur comportant une plaque membrane (1) en matière semi-conductrice, présentant au moins une partie membrane avec au moins une piézorésistance, et une plaque isolante (2) sur laquelle est fixée la plaque membrane (1), caractérisé en ce que sur la surface de la plaque isolante (2) opposée à la plaque membrane (1) se trouve fixée une plaque de base (3) possédant substantiellement le même coefficient de dilatation thermique que la plaque membrane (1) et dont les dimensions sont adaptées aux dimensions de la plaque membrane (1) de telle sorte que, lors d'un changement de température, les forces de déformation exercées par la plaque membrane (1) et la plaque de base (3) sur la plaque isolante (2) sont substantiellement égales et permettent l'obtention d'un état de contrainte équilibré.

2. Elément transducteur suivant la revendication 1, caractérisé en ce que la plaque de base (3) et la plaque membrane (1) sont fabriquées dans la même matière.

3. Elément transducteur suivant la revendication 2, caractérisé en ce que la plaque membrane (1) et la plaque de base (3) sont en silicium, en particulier un monocristal de silicium.

4. Elément transducteur suivant la revendication 1, 2 ou 3, caractérisé en ce que la plaque isolante (2) est en verre.

5. Elément transducteur suivant une des revendications 1 à 4, caractérisé en ce qu'il est prévu une jonction anodique entre la plaque membrane (1) et la plaque isolante (2) et une jonction par frittage de calcin entre la plaque isolante (2) et la plaque de base (3).

6. Elément transducteur suivant une des revendications 1 à 4, caractérisé en ce qu'il est prévu une jonction anodique entre la plaque membrane (1) et la plaque isolante (2) et des jonctions par frittage de calcin exécutées simultanément entre la plaque isolante (2) et la plaque de base (3) ainsi qu'entre la plaque de base (3) et un support (7, 9).

7. Elément transducteur suivant une des revendications 1 à 4, caractérisé en ce qu'il est prévu des jonctions anodiques entre la plaque membrane (1), la plaque isolante (2) et la plaque de base (3).

8. Elément transducteur suivant une des revendications qui précèdent, caractérisé en ce que sur la surface de la plaque de base (3) opposée à la plaque isolante (2) se trouve fixé un support intermédiaire (9) fabriqué dans une matière possédant substantiellement le même coefficient de dilatation thermique que la plaque isolante (2).

9. Elément transducteur suivant une des revendications qui précèdent, caractérisé en ce qu'il est prévu au moins un orifice (6) traversant la plaque de base (3) et la plaque isolante (2), centré par rapport à la partie membrane de la plaque membrane (1).

10. Procédé de fabrication d'un élément transducteur au cours duquel il est fixé par voie anodique une plaque membrane (1) en matière semiconductrice, présentant au moins une partie membrane avec au moins une piézorésistance, sur un plaque (2) en matière isolante, caractérisé en ce qu'il est procédé à une jonction anodique entre une galette (18) de matière semi-conductrice, présentant une pluralité de parties membranes, et un substrat de matière isolante en forme de plaque (17), à la découpe du lamifié ainsi formé un unités comportant chaque fois au moins une partie membrane, à la préfabrication de plaques de base (3) dans une matière possédant substantiellement le même coefficient de dilatation thermique que la plaque membrane (1) et de dimensions adaptées à la plaque membrane (1) de chaque unité, et à la fixation d'une plaque de base préfabriquée sur la plaque isolante (2) de chaque unité, de sorte que lors d'un changement de température les forces de déformation exercées par la plaque de base (3) et la plaque membrane (2) sur la plaque isolante (2) sont substantiellement égales et permettent l'obtention d'un état de contrainte équilibré.

11. Procédé de fabrication d'un élément transducteur au cours duquel il est fixé par voir anodique une plaque membrane (1) en matière semi-conductrice, présentant au moins une partie membrane avec au moins une piézorésistance, sur une plaque (2) en matière isolante, caractérisé en ce qu'il est procédé à l'insertion d'un substrat de matière isolante en forme de plaque (17) entre une galette (18) de matière semi-conductrice, présentant une pluralité de parties membranes, et une galette de base (20) possédant substantiellement le même coefficient de dilatation thermique que la galette membrane (18) et de dimensions adaptées à la galette membrane, à la jonction anodique dudit substrat avec lesdites galettes et à la découpe du lamifié ainsi formé en unités comportant chacune au moins une partie membrane, de sorte que lors d'un changement de température les forces de déformation exercées par chacune des unités de la plaque membrane (1) et de la plaque de base (3) sur la plaque isolante (2) sont substantiellement égales et permettent l'obtention d'un état de contrainte équilibré.

12. Procédé suivant la revendication 10 ou 11, caractérisé en ce ce qu'il est chaque fois réalisé un orifice (15) traversant le substrat isolant en forme de plaque (17) et la galette de base (20), de manière centrée par rapport à chacune des parties membranes de la galette membrane (18).

13. Capteur de pression comportant un élément transducteur suivant une des revendications 1 à 9, caractérisé en ce que l'élément transducteur (8) est fixé directement ou au moyen d'un support intermédiaire (9), fixé lui-même sur la plaque de base (3), sur un support (7) inséré dans le corps du capteur (32, 33, 39, 53).

14. Capteur de pression suivant la revendication 13, caractérisé en ce que le support (7) est substantiellement de forme plate et est relié de manière souple au corps du capteur (33, 39, 53).

15. Capteur de pression suivant la revendication 12 ou 14, caractérisé en ce que le support (7) est relié au corps du capteur (33, 39, 53) par l'intermédiaire d'une pièce tubulaire (30).

16. Capteur de pression suivant la revendication 15, caractérisé en ce que la pièce tubulaire (30) se prolonge du même côté du support (7) que l'élément transducteur (8).

17. Capteur de pression suivant la revendication 15, caractérisé en ce que la pièce tubulaire (30) se prolonge du côté du support (7) opposé à l'élément transducteur (8).

18. Capteur de pression suivant une des revendications 13 à 17, caractérisé en ce qu'en vue de soumettre l'élément transducteur à une contrainte de pression, le capteur renferme, de manière connue en soi, un liquide de transfert de la pression (25) et est rendu étanche au moyen d'une membrane (28).

Claims

1. A transduction element comprising a diaphragm plate (1) defining at least one diaphragm zone having at least one piezoresistance and made of semiconductor material, and an insulating plate (2) to which the diaphragm plate (1) is mounted, characterized in that a base plate (3) is mounted to the surface of the insulating plate (2) remote from the diaphragm plate (1), said base plate (3) having substantially the same coefficient of thermal expansion as the diaphragm plate (1) and the dimensions thereof being matched to that of the diaphragm plate (1) in such a manner that with temperature changes the deformation forces exerted by the diaphragm and base plates (1, 3) on the insulating plate (2) are substantially equal for achieving a symmetrical stress status.

2. A transduction element as claimed in claim 1 in which the base plate (3) and the diaphragm plate (1) are made of the same material.

3. A transduction element as claimed in claim 2 in which the base plate (1) and the diaphragm plate (3) are made of a silicon material, especially from monocrystal silicon.

4. A transduction element as claimed in claims 1, 2 or 3 in which the insulating plate is made of a glass material.

5. A transduction element as claimed in any one of claims 1 to 4, in which there is an anodic connection between the diaphragm plate (1) and the insulating plate (2) and a glass frit connection between the insulating plate (2) and the base plate (3).

6. A transduction element as claimed in any one of claims 1 to 4 having an anodic connection between the diaphragm plate (1) and the insulating plate (2) as well as a simultaneously applied glass frit connection between the insulating plate (2) and the base plate (3) and also between the base plate (3) and a support (7, 9).

7. A transduction element as claimed in any one of claims 1 to 4 having anodic connections between the diaphragm plate (1), the insulating plate (2) and the base plate (3).

8. A transduction element as claimed in any one of the preceding claims, including an intermediate support (9) mounted to a surface of the base plate (3) remote from the insulating plate (2) and made of a material having substantially the same coefficient of thermal expansion as the insulating plate (2).

9. A transduction element as claimed in any one of the preceding claims having at least one hole (6) extending through the base plate (3) and the insulating plate (2), said hole being oriented with respect to the diaphragm zone of the diaphragm plate (1).

10. A method of manufacturing a transduction element, in which a diaphragm plate (1) defining at least one diaphragm zone having at least one piezoresistance and made of semiconductor material is connected by anodic means to a plate (2) of insulating material, characterized by connecting a wafer (18) made of the semiconductor material and having a plurality of diaphragm zones to a plate-like substrate (17) of an insulating material by anodic means, cutting the laminate thus formed into units each having at least one diaphragm zone, prefabricating base plates (3) made of a material having substantially the same coefficient of thermal expansion as the diaphragm plate (1) and the dimension thereof being matched to that of the diaphragm plate (1) of each unit, mounting a prefabricated base plate to the insulating plate (1) of each unit, whereby with temperature changes the deformation forces exerted by the base plate (3) and the diaphragm plate (1) on the insulating plate (2) are substantially equal for achieving a symmetrical stress status.

11. A method of manufacturing a transduction element, in which a diaphragm plate (1) defining at least one diaphragm zone having at least one piezoresistance and made of semiconductor material is connected by anodic means to a plate (2) of insulating material, characterized by disposing a plate substrate (17) of an insulating material intermediate a wafer (18) made of the semiconductor material and having a plurality of diaphragm zones and a base wafer (20) and connecting said plate substrate by anodic means with said wafers, said base wafer (20) being made of a material having substantially the same coefficient of thermal expansion as the diaphragm wafer (18) and the dimension thereof being matched to that of the diaphragm wafer, and cutting the laminate thus formed into units having at least one diaphragm zone, whereby with temperature changes the deformation forces exerted by the base plate (3) and the diaphragm plate (1) on the insulating plate (2) are substantially equal for achieving a symmetrical stress status.

12. A method according to claim 10 or 11 in which holes (15) are made through the insulating plate substrate (17) and the base wafer (20), said holes are oriented towards the diaphragm zones of the diaphragm wafer (18).

13. A pressure transducer incorporating a transduction element as claimed in any one of claims 1 to 9, characterized in that the transduction element (8) is secured, directly or by means of an intermediate support (9) mounted to the base plate (3), onto a holder (7) arranged in the housing (32, 33, 39, 53) of the transducer.

14. A pressure transducer as claimed in claim 13 in which the holder (7) has a substantially plate-like form and is connected in an elastical manner to the housing (33, 39, 53) of the transducer.

15. A pressure transducer as claimed in claim 12 or 14 in which the holder (7) is connected to the housing (33, 39, 53) of the transducer through a tubular part (30).

16. A pressure transducer as claimed in claim 15, in which the tubular part (30) extends from the same side of the holder (7) as the transduction element (8).

17. A pressure transducer as claimed in claim 15, in which the tubular part (30) extends from the side of the holder (7) remote from the transduction element (8).

18. A pressure transducer as claimed in any of claims 13 to 17, in which a pressure transmission medium (25) for pressure loading the transduction element is hermetically sealed in a manner known per se by a diaphragm (28) of the transducer.

**Fig.1**

**Fig.2**

**Fig.3**

Fig. 4

Fig. 5

Fig. 6

Fig. 7

Fig. 8

Fig. 9

2

Fig. 10

Fig. 11